# FASCICULE DE BREVET EUROPEEN

(11) **EP 3 695 129 B1**
(45) Date de publication et mention de la délivrance du brevet: **12.06.2024**
(21) Numéro de dépôt: 18786336.0
(22) Date de dépôt: 15.10.2018
(51) Int. Cl.: F16B 19/10, F16B 33/00, F16B 37/06

(54) **ECROU RAINURÉ POUR FIXATION AVEUGLE, RIVET ET ASSEMBLAGE COMPORTANT UN TEL ÉCROU**
NUTMUTTER FÜR BLINDBEFESTIGUNG, NIETE UND ANORDNUNG MIT EINER SOLCHEN MUTTER
GROOVED NUT FOR BLIND FASTENING, RIVET AND ASSEMBLY COMPRISING SUCH A NUT

(30) Priorité: 13.10.2017 FR 1759596
(43) Date de publication de la demande: 19.08.2020
(73) Titulaire: LISI Aerospace, 75012 Paris (FR)
(72) Inventeur: MEIFFRE, Loïc, 78700 Conflans-Sainte-Honorine (FR); PAILHORIES, Guy, 12200 Villefranche de Rouergue (FR); VANDAELE, Christophe, 33110 Le Bouscat (FR)
(74) Mandataire: Lavoix
(86) Numéro de dépôt international: PCT/EP2018/078060
(87) Numéro de publication internationale: WO 2019/073076

(56) Documents cités:
- EP-A1- 0 691 480
- EP-A2- 0 595 041
- EP-A2- 0 945 631
- DE-T2- 60 308 278
- FR-A1- 3 016 417

## Description

La présente invention concerne les fixations aveugles. Plus particulièrement, l'invention se rapporte à un écrou pour assembler des éléments d'une structure, du type comprenant : une collerette apte à contacter une face avant de la structure, une zone de serrage présentant un diamètre extérieur apte à être inséré dans un trou de la structure, une zone de déformation adjacente à la zone de serrage et apte à former un bulbe contre une face arrière de la structure, opposée à la face avant ; et une portion taraudée adjacente à la zone de déformation.

Les fixations aveugles sont des fixations installées au travers de structures par un seul côté, communément appelé face avant ; le côté opposé, appelé face arrière ou côté aveugle, n'est pas accessible. Ces fixations sont par exemple utilisées dans l'assemblage de structures d'aéronef.

Le document FR2515283 décrit des écrous pour fixations aveugles du type précité, ainsi que des rivets pour fixations aveugles comportant un tel écrou associé à une vis. On connait également des rivets pour fixations aveugles du type « tiré-vissé », du document EP0691480 A1, ou du document

FR3016417. Un rivet de ce type est installé en tirant sur la vis pour créer un bulbe du côté arrière, puis en vissant la vis dans l'écrou, les deux étapes étant effectuées en maintenant la collerette de l'écrou en contact avec le côté avant de la structure.

Il arrive que lors du vissage de la vis dans l'écrou, ledit écrou soit entraîné en rotation par la vis, par exemple dans le cas de montages dits humides où du mastic est apposé dans le trou. Dans ce cas, le rivet ne peut pas être installé puisque l'écrou est entraîné en rotation avant que la vis ait été complètement insérée dans l'écrou.

Dans le document FR2515283, une portion de l'écrou comporte des cannelures longitudinales formées sur sa surface extérieure. Lesdites cannelures présentent un diamètre supérieur au diamètre de la portion non cannelée de l'écrou. Ainsi, lorsque l'écrou est inséré dans un trou de la structure à assembler, les cannelures pénètrent en interférence avec la paroi dudit trou, pour immobiliser l'écrou en rotation.

Cependant, lorsque la structure comporte un élément en matériau composite, la présence de cannelures pénétrant en force dans la paroi du trou conduit à des problèmes de délaminage. De même, lorsqu'e l'un des éléments de la structure est en métal, lesdites cannelures peuvent rayer la matière et augmenter le risque d'initiation de fissure. Il existe donc un besoin d'un moyen d'anti-rotation de l'écrou permettant d'éviter ces inconvénients.

La présente invention a pour but de résoudre ce problème. A cet effet, l'invention a pour objet un écrou selon la revendication 1. Il s'agit d'un écrou du type précité, comportant un rainurage sur une circonférence extérieure d'au moins une partie de la zone de déformation, un diamètre maximal dudit rainurage étant inférieur ou égal au diamètre extérieur de la zone de serrage. Selon l'invention, le rainurage s'étend sur l'ensemble de la circonférence extérieure d'une section transversale de l'écrou surs forme de stries, un pas radial entre deux stries consécutives étant inférieur ou égal à 0,25 mm.

Comme il sera détaillé ci-après, un tel écrou est apte à être installé dans la structure en respectant l'intégrité de cette dernière et en étant bloqué en rotation.

Suivant d'autres aspects avantageux de l'invention, l'écrou comporte l'une ou plusieurs des caractéristiques suivantes, prises isolément ou suivant toutes les combinaisons techniquement possibles :
- le pas radial entre deux stries consécutives est compris entre 0,04 mm et 0,25 mm ;
- une profondeur radiale des stries est comprise entre 0,6% et 2% du diamètre extérieur de l'écrou ;
- les stries s'étendent parallèlement à un axe de révolution de l'écrou ;
- les stries s'étendent en hélice autour d'un axe de révolution de l'écrou ;
- le rainurage présente une section sensiblement sinusoïdale ;
- l'écrou comprend au moins une surface externe passivée ou couverte d'un revêtement choisi parmi un revêtement lubrifiant, un revêtement anti-corrosion et un revêtement aluminium ;
- le rainurage est obtenu par déformation de la matière, par usinage, par électro-érosion ou par ablation laser.

L'invention se rapporte en outre à un rivet comprenant : une vis comportant une portion filetée, un fût et une tête ; et un écrou tel que décrit ci-dessus, la zone de serrage de l'écrou étant apte à recevoir le fût de la vis, la portion taraudée dudit écrou aveugle étant apte à coopérer avec la portion filetée de la vis.

Suivant d'autres aspects avantageux de l'invention, le rivet comporte l'une ou plusieurs des caractéristiques suivantes, prises isolément ou suivant toutes les combinaisons techniquement possibles :
- le fût de la vis est cylindrique et présente un diamètre extérieur constant ;
- le fût de la vis comprend une première et une seconde portions, présentant respectivement un premier et un second diamètres extérieurs, ledit second diamètre étant inférieur au premier diamètre.

L'invention se rapporte également à un assemblage comprenant : au moins une structure comprenant une face avant et une face arrière opposées, un trou débouchant sur chacune desdites surfaces; et un écrou tel que décrit ci-dessus, ledit assemblage étant apte à être disposé dans une configuration installée, dans laquelle : la collerette de l'écrou est au contact de la face avant ; la zone de déformation de l'écrou forme un bulbe externe au contact de la face arrière; et le rainurage contacte la face arrière et une arête formant intersection entre le trou et ladite face arrière.

Suivant d'autres aspects avantageux de l'invention, l'assemblage comporte l'une ou plusieurs des caractéristiques suivantes, prises isolément ou suivant toutes les combinaisons techniquement possibles :
- dans une configuration initiale, avant déformation sous forme de bulbe externe de la zone de déformation, un diamètre maximal du rainurage est inférieur à un diamètre minimal du trou ;
- la face arrière comporte une couche de peinture d'épaisseur supérieure à la profondeur des stries ;
- l'assemblage comporte également une vis comportant une portion filetée et une tête, telle que, dans la configuration installée, la tête est au contact de la collerette de l'écrou et la portion filetée coopère avec la portion taraudée de l'écrou.

L'invention sera mieux comprise à la lecture de la description qui va suivre, donnée uniquement à titre d'exemple non limitatif et faite en se référant aux dessins sur lesquels :
- la figure 1 est une vue latérale, en coupe partielle, d'un rivet selon un mode de réalisation de l'invention, dans une configuration initiale ;
- la figure 2 est une vue en coupe d'un assemblage comprenant le rivet de la figure 1 dans une configuration installée ;
- la figure 3 est une section selon la ligne de coupe III-III de la figure 1 ;
- la figure 4 est une photographie d'un assemblage similaire à l'assemblage de la figure 2;
- la figure 5 est une photographie d'un élément de l'assemblage de la figure 2 après retrait du rivet ; et
- La figure 6 est une photographie au microscope d'une portion de la figure 4.

Un mode de réalisation d'un écrou aveugle utilisé avec une vis pour former un rivet aveugle est décrit ci-après à titre d'exemple uniquement. Dans la suite de la description, on entend par « écrou aveugle » ou « rivet aveugle », un écrou ou un rivet apte à être inclus dans une fixation aveugle telle que définie précédemment.

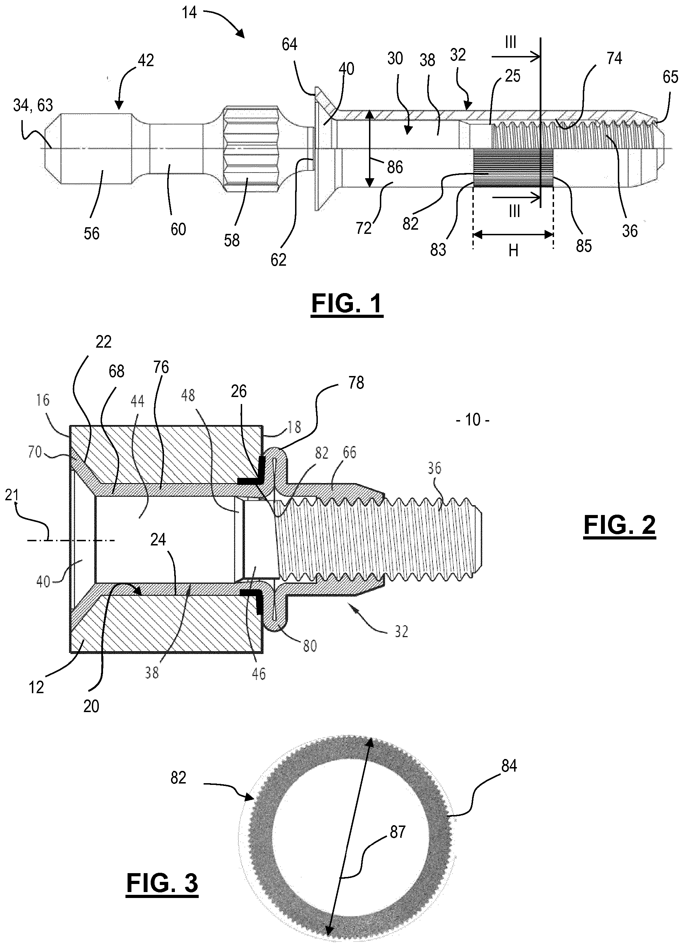

La figure 1 représente un rivet 14 comportant un écrou aveugle 32 selon un mode de réalisation de l'invention, dans une configuration non installée ou configuration initiale. La figure 2 représente un assemblage 10 dans une configuration installée, comportant le rivet 14 installé dans une structure 12.

La structure 12 comprend une première face 16 et une deuxième face 18, opposée à la première face 16. Par convention, dans le reste de la description, la première face 16 de la structure 12 est appelée face avant, tandis que la deuxième face 18 est appelée face arrière.

Les faces avant 16 et arrière 18 sont dans cet exemple sensiblement planes et parallèles entre elles. En variante non représentée, les faces avant 16 et arrière 18 forment un angle non nul, par exemple inférieur à 7°. Préférentiellement, les faces avant 16 et arrière 18 appartiennent à au moins deux éléments distincts. Lesdits éléments sont par exemple métalliques ou en matériaux composites. Pour simplifier les dessins, un seul élément de structure est représenté sur la figure 2.

De préférence, la face arrière 18 est couverte d'une couche de revêtement de type peinture. D'une manière générale, les surfaces des structures utilisées dans l'industrie aéronautique sont fréquemment revêtues d'une couche de peinture en tant que protection contre la corrosion, ou contre l'attaque de produits chimiques.

La structure 12 comprend un trou 20 débouchant sur chacune des faces avant 16 et arrière 18. Le trou 20 est préférentiellement disposé selon un premier axe 21 sensiblement perpendiculaire à la face avant 16. Dans l'exemple de la figure 2, l'axe 21 du trou est également perpendiculaire à la face arrière 18 ; en variante non représentée, la face arrière 18 forme un angle non nul, par exemple inférieur à 7°, avec un plan perpendiculaire à l'axe 21 du trou.

Le trou 20 comporte une fraisure 22, adjacente à la face avant 16, et une paroi cylindrique 24, adjacente à la surface fraisée et s'étendant jusqu'à la face arrière 18. Une arête 26 sensiblement circulaire forme l'intersection entre la paroi 24 et la face arrière 18.

Le rivet 14 est apte à solidariser ensemble les éléments formant la structure 12. Comme représenté en figure 1, le rivet comporte une vis 30 et un écrou aveugle 32, destinés à être assemblés dans le trou 20 pour former l'assemblage 10 de la figure 2. De préférence, la vis 30 et l'écrou 32 sont métalliques, par exemple en acier inoxydable, ou en alliage de titane.

La vis 30 comporte une portion filetée 36, un fût 38 et une tête 40, alignés selon un deuxième axe 34. La vis 30 comprend en outre un élément de préhension 42, adjacent à la tête 40. Dans le mode de réalisation des figures 1 et 2, la tête 40 est une tête fraisée, destinée à affleurer la face avant 16.

Dans cet exemple, le fût 38 de la vis comporte une première portion 44 et une seconde portion 46 reliées par une section de raccordement 48. Chacune des portions 44 et 46 a une forme sensiblement cylindrique de révolution, disposée selon l'axe 34.

En variante, le fût de la vis a une forme sensiblement cylindrique de révolution, de diamètre constant.

Le rivet 14 présente une capacité maximale de hauteur de serrage Gₘₐₓ et une capacité minimale de hauteur de serrage Gₘᵢₙ, qui correspondent respectivement à l'épaisseur maximale et à l'épaisseur minimale de la structure 12 que le rivet 14 peut assembler. Dans le mode de réalisation de la figure 2, l'épaisseur de la structure 12 selon le premier axe 21 est comprise entre Gₘᵢₙ et Gₘₐₓ.

L'élément de préhension 42 de la vis 30 est apte à coopérer avec un outil de pose pour une installation automatisée ou manuelle du rivet 14. L'élément de préhension 42 comporte par exemple une première portion 56 et une seconde portion 58 de préhension, reliées par une portion de blocage 60. Les première 56 et seconde 58 portions de préhension et la portion de blocage 60 sont destinées respectivement à guider l'introduction du rivet 14 dans un outil de pose, à transmettre un couple de torsion et à limiter un mouvement axial du rivet dans l'outil de pose. Un rivet comprenant un tel élément de préhension, ainsi que sa coopération avec un outil de pose, sont notamment décrits dans le document FR3016417.

En variante, le rivet peut comprendre d'autres formes de l'élément de préhension, permettant la traction et la rotation de la vis 30.

L'élément de préhension 42 est relié à la tête 40 par une gorge de rupture 62. La gorge est configurée de sorte à soutenir un certain niveau de contrainte en traction selon le deuxième axe 34, et à céder au-delà d'un certain seuil de contrainte en torsion.

Le rivet 14 comprend un écrou aveugle 32 selon un mode de réalisation de l'invention. L'écrou 32 a une forme tubulaire, disposée selon un troisième axe de révolution 63 et ouverte à une première 64 et à une seconde 65 extrémités. L'écrou 32 comporte un corps tubulaire 68 et une collerette évasée 70, alignés selon le troisième axe 63.

La collerette 70, adjacente à la première extrémité 64, est apte à recevoir la tête 40 de la vis 30. La collerette 70 est en saillie radiale par rapport au corps tubulaire 68.

Dans le mode de réalisation des figures 1 et 2, la collerette 70 a une forme sensiblement tronconique, complémentaire de la tête fraisée 40 et de la fraisure 22 de la structure 12. En variante, la collerette 70 s'évase sensiblement perpendiculairement au troisième axe 63 et la structure 12 est dépourvue de fraisure.

De préférence, la première extrémité 64 est formée par une surface plane, sans creux ni relief, de la collerette 70 fraisée ou protubérante.

Le corps tubulaire 68 de l'écrou présente une surface externe 72. Dans la configuration initiale de la figure 1, ladite surface externe 72 est de forme sensiblement cylindrique de révolution autour du troisième axe 63. De préférence, un diamètre extérieur maximal 86 du corps tubulaire 68 est légèrement inférieur au diamètre du trou 20, de manière à prévoir un jeu positif entre lesdites surfaces.

Le corps tubulaire 68 comprend une zone de serrage 76, une zone de déformation 78 et une portion taraudée 66, alignées selon le troisième axe 63. La zone de serrage 76, adjacente à la collerette 70, est notamment apte à recevoir le fût 38 de la vis 30 et à être disposée dans le trou 20 de la structure 12. La portion taraudée 66, adjacente à la seconde extrémité 65, est apte à coopérer avec la portion filetée 36 de la vis 30.

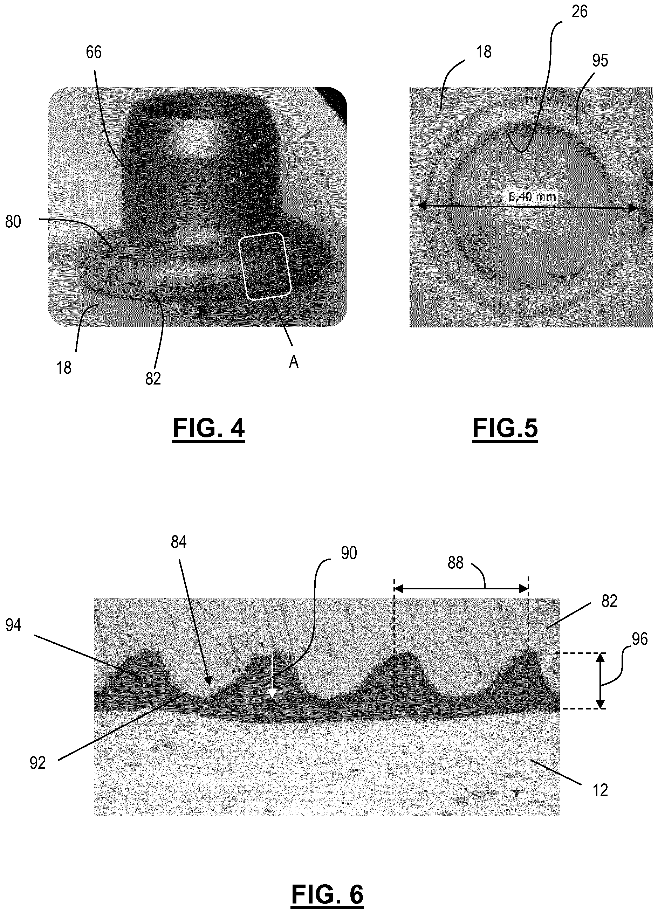

La zone de déformation 78, comprise entre la zone de serrage 76 et la portion taraudée 66, est apte à former un bulbe externe 80 au contact de la face arrière 18 de la structure 12, notamment dans la configuration installée des figures 2 et 4.

Dans le mode de réalisation représenté, la zone de serrage 76 et la zone de déformation 78 forment une surface interne 74 continue, de forme cylindrique ; la zone de déformation 78 présente une résistance élastique inférieure à la résistance élastique du reste de l'écrou aveugle 32. Cette faible résistance élastique est par exemple obtenue en recuisant sélectivement la zone de déformation 78, au moyen d'une machine à induction.

En variante non représentée, la zone de déformation 78 présente une épaisseur inférieure à celle de la zone de serrage 76.

Essentiellement au niveau de la zone de déformation 78, la surface externe 72 du corps tubulaire 68 comprend un rainurage 82. Comme représenté sur la figure 3, ledit rainurage 82 est réparti sur la totalité d'une circonférence extérieure de l'écrou 32. Selon le troisième axe 63, le rainurage s'étend sur une longueur H telle que, dans la configuration installée de l'assemblage 10, ledit rainurage est en contact avec la face arrière 18 de la structure 12 et avec l'arête circulaire 26 du trou 20. Selon l'épaisseur de la structure 12, dans la configuration installée, une partie du rainurage 82 s'étend ou non dans le trou 20.

Selon un mode de réalisation, une première extrémité axiale 83 du rainurage, proche de la collerette 70, est sensiblement disposée à une jonction entre la zone de serrage 76 et la zone de déformation 78. En variante, la première extrémité 83 et une partie du rainurage 82 sont disposés sur la zone de serrage 76.

De préférence, une seconde extrémité axiale 85 du rainurage est disposée sur la zone de déformation 78. En variante, ladite seconde extrémité est disposée sur la portion taraudée 66.

Le rainurage 82 comprend dans cet exemple une multitude de stries 84 sensiblement rectilignes, s'étendant dans la direction du troisième axe 63. Dans un autre exemple non représenté, le rainurage comprend une pluralité d'hélices sensiblement parallèles les unes aux autres, s'enroulant autour du troisième axe 63. Dans un autre exemple non représenté, le rainurage comprend deux séries d'hélices, les hélices d'une même série étant sensiblement parallèles les unes aux autres, les deux séries d'hélices s'enroulant en sens opposé autour du troisième axe 63 pour former un motif en diamant.

Le diamètre extérieur maximal 87 des stries 84 (figure 3) est inférieur ou égal au diamètre extérieur maximal 86 du corps tubulaire 68, mesuré par exemple au niveau de la zone de serrage 76. Ainsi, les stries 84 n'entrent pas en interférence avec la paroi 24 du trou 20 lorsque le rivet est inséré dans le trou.

La demanderesse a découvert que, en configuration installée, l'anti-rotation de l'écrou 32 est assurée par un rainurage 82 disposé sur la surface externe du bulbe 80 en contact avec la face arrière 18 de la structure 12, ledit rainurage s'étendant au moins en vis-à-vis de l'arête 26 du trou 20. Il n'est pas nécessaire que le rainurage 82 se prolonge à l'intérieur du trou 20. En effet, lors de l'étape de traction pour former le bulbe 80, le rainurage 82 se déforme radialement vers l'extérieur et s'imprime axialement dans la face arrière 18 de la structure. En même temps, une portion de l'écrou 32 disposée en face de l'arête 26 se déforme très légèrement dans la direction radiale, de sorte que le rainurage contacte l'arête 26 du trou 20.

Afin que le rainurage entre en contact avec la face arrière et l'arête 26 quelle que soit l'épaisseur de structure 12 que peut serrer l'écrou aveugle 32 ou le rivet aveugle 14, la première extrémité axiale 83 du rainurage 82 est écartée de la collerette 70 d'une distance inférieure ou égale à la capacité minimale de hauteur de serrage Gₘᵢₙ de l'écrou aveugle. De même, la seconde extrémité axiale 85 du rainurage est écartée de la collerette 70 d'une distance supérieure ou égale à la capacité maximale de hauteur de serrage Gₘₐₓ, additionnée d'une longueur équivalente à (n-1)/2 fois le diamètre du trou 20, « n » correspondant au ratio entre le diamètre du bulbe 80 formé et le diamètre du trou 20.

Par exemple, un rivet aveugle 14 décrit dans le document FR3016417A1, de diamètre 6,32 mm, est destiné à être inséré dans un trou 20 de diamètre nominal de 6,35 mm (8/32") et de « grip 8 ». Plus précisément, un tel rivet est conçu pour assembler une structure 12 ayant une épaisseur nominale de 12,70 mm (8/16") ; ledit rivet a une capacité minimale de hauteur de serrage Gₘᵢₙ de 10,914 mm - mesuré depuis la collerette 70 - et une capacité de maximale de hauteur de serrage Gₘₐₓ de 12,898 mm. Le rivet aveugle 14 peut par ailleurs être déformé de sorte que le bulbe présente un diamètre égal à 1,5 fois le diamètre nominal du trou 20.

Le rainurage doit donc s'étendre sur une longueur H débutant avant Gₘᵢₙ, par exemple à 10 mm de la collerette 70, jusqu'à au moins [Gₘₐₓ + ((1,5-1)/2 × 6,35)] = 14,48 mm, par exemple à 15 mm de la collerette 70.

Lorsque le trou comprend un mastic, ou une surface lubrifiante, il est préférable que le rainurage 82 comprenne un grand nombre de stries 84, disposées sur la circonférence de l'écrou 32 selon un pas radial 88 très fin. Le pas radial 88 est représenté sur la vue au microscope de la figure 6.

Le pas radial 88 est inférieur ou égal à 0,25 mm. Le pas radial est en théorie mesuré le long d'un arc de cercle ; cependant, la faible valeur du pas 88 par rapport au diamètre 86 de l'écrou permet par simplification de mesurer ledit pas de manière rectiligne.

Sur l'ensemble de la circonférence de l'écrou 32, le pas radial 88 n'est pas nécessairement constant. De préférence, sur toute la circonférence de l'écrou 32, le pas radial 88 entre deux stries 84 consécutives est compris entre 0,04 mm et 0,25 mm et plus préférentiellement compris entre 0,07 mm et 0,15 mm.

Selon un mode de réalisation, une règle de calcul du nombre de stries est de diviser la circonférence extérieure de l'écrou, par exemple mesurée dans la zone de serrage, par un pas radial 88 compris entre 0,04 mm et 0,25 mm. Ainsi, pour un écrou aveugle 32 de diamètre nominal de 6/32" (4,76 mm), soit une circonférence de 14,95 mm (π × 4,76 mm), le rainurage devra comprendre un nombre de stries compris entre 60 et 374. Comme indiqué précédemment, ces stries peuvent être disposées longitudinalement, c'est-à-dire parallèle à l'axe de révolution 63, ou en hélices parallèles, ou croisées autour du troisième axe 63.

Le rainurage obtenu augmente le blocage en rotation, notamment lorsque l'installation de l'écrou aveugle 32 ou du rivet 12 s'effectue en montage humide. Le rainurage permet également l'écoulement radial du mastic hors de la surface d'appui du bulbe 80 lors de la formation dudit bulbe.

En section transversale, les stries 84 peuvent prendre différentes formes. Une forme préférée consiste en des stries ayant une section de forme sensiblement sinusoïdale. Une autre forme préférée est en dents de scie, avec des pointes acérées, disposée dans le sens inverse de rotation de la vis.

Préférentiellement, une profondeur 90 des stries 84 (figure 6), mesurée radialement par rapport au troisième axe 63, est comprise entre 0,6% et 2% du diamètre extérieur maximal 86 de l'écrou aveugle. En dessous de cette limite, les stries peuvent ne pas être assez marquées pour empêcher la rotation, notamment en montage humide. Une trop grande profondeur peut également affaiblir la résistance mécanique de l'écrou.

Le rainurage peut être obtenu par usinage, par ablation laser, par électro-érosion ou par déformation de la matière. Selon le procédé de formage choisi et la matière, la forme finale des stries peut ne pas être complètement uniforme d'une strie à une autre, et les contours des stries peuvent différer localement de quelques microns de la forme nominale.

Après formation du rainurage, la surface externe 72 de l'écrou aveugle 32 peut être revêtue d'un revêtement anti-corrosion du type HI-KOTE^{™} de la société Hi-Shear, ou d'un revêtement lubrifiant, ou d'un revêtement aluminium ou peut encore être passivée.

Un procédé d'installation du rivet aveugle 14 dans une structure 12, pour former l'assemblage 10, va maintenant être décrit.

Tout d'abord, la vis 30 et l'écrou aveugle 32 sont assemblés pour former le rivet 14. Plus précisément, la portion filetée 36 de la vis 30 est vissée dans la portion taraudée 66 de l'écrou aveugle 32, jusqu'à ce que la tête 40 de la vis vienne en butée contre la collerette 70. Le rivet aveugle 14, dans la configuration initiale de la figure 1, est ainsi formé.

Les étapes suivantes sont par exemple réalisées à l'aide d'un outil de pose en prise avec l'élément de préhension 42 de la vis 30, de manière analogue au procédé décrit dans le document FR3016417.

Le rivet aveugle 14 en configuration initiale est introduit dans le trou 20 à partir de la face avant 16 de la structure 12. Le rivet aveugle 14 est déplacé jusqu'à la mise en butée de la collerette 70 de l'écrou aveugle 32 contre la fraisure 22 du trou.

L'extrémité libre 64 de la collerette 70 de l'écrou 32, ainsi que la gorge de rupture 62 de la vis 30, affleurent la face avant 16 de la structure 12. La portion taraudée 66 de l'écrou 32 et la portion filetée 36 de la vis 30 forment une saillie hors de la structure 12, du côté de la face arrière 18.

L'écrou aveugle 32 est ensuite maintenu en place dans le trou 20 en exerçant une poussée axiale contre la surface plane formée par l'extrémité 64 de la collerette 70. Simultanément, une traction axiale est exercée sur la vis 30, ce qui induit une déformation plastique de la zone de déformation 78. Ladite déformation plastique conduit au bulbe externe 80 formé contre la face arrière 18. Le rainurage sur la portion de déformation 78 se déforme radialement vers l'extérieur et s'imprime axialement dans la face arrière 18 et contacte l'arête circulaire 26 du trou 20 de la structure 12.

A l'étape suivante, l'élément de préhension 42 est entraîné en rotation pour visser la portion filetée 36 de la vis 30 dans la portion taraudée 66 de l'écrou aveugle 32, jusqu'à ce que la tête 40 de la vis arrive en butée contre la collerette 70, puis une torsion est exercée sur l'élément de préhension 42 de manière à casser la vis 30 au niveau de la gorge de rupture 62. Le rainurage 82 bloque la rotation de l'écrou aveugle lors de cette étape.

L'assemblage 10 est alors dans la configuration installée, représentée à la figure 2 sans l'élément de préhension 42. Le bulbe externe 80 et la deuxième face 18 d'une part, et la collerette 70 et la fraisure 22 d'autre part, forment des butées opposées qui bloquent axialement l'écrou aveugle 32 dans le trou 20.

La figure 4 est une photographie d'un écrou aveugle 32 déformé, en configuration installée dans une structure représentée par une éprouvette de test. Le rainurage 82 est visible sur une partie du bulbe 80 qui n'est pas en appui contre la face arrière 18.

La figure 5 montre une photographie de la face arrière 18 de l'éprouvette de la figure 4 après un retrait de l'écrou aveugle 32.

La figure 6 est une vue au microscope d'une coupe axiale de l'écrou aveugle 32 de la figure 4, dans la portion A indiquée sur la figure 4. La figure 6 montre un empilement formé par le rainurage 82 de l'écrou 32, une fine couche de mastic 92 recouvrant ledit rainurage, une couche de peinture 94 revêtant la structure 12, et ladite structure 12 représentée par l'éprouvette de test.

Comme visible sur la figure 5, le rainurage 82 a laissé une empreinte 95 sur la face arrière 18 de l'éprouvette. Comme visible sur la figure 6 en configuration installée, la structure 12 n'est pas au contact des stries 84.

En effet, lorsqu'une épaisseur 96 de la couche de peinture 94 est supérieure à la profondeur 90 des stries, la structure 12 n'est pas atteinte par les stries en configuration installée. Cependant, les frottements résultant de la déformation 95 de la couche de peinture 94 sur la face arrière 18 sont suffisants pour bloquer la rotation de l'écrou aveugle 32.

Les essais ont montré que l'écrou aveugle 32 selon l'invention résistait à toute rotation, même sous l'application de couples allant jusqu'à 15 N.m pour un écrou de diamètre 8/32".

Bien que dans l'exemple représenté l'écrou aveugle 32 soit utilisé avec une vis 30 de forme spécifique pour former un rivet aveugle, l'écrou aveugle 32 peut bien sûr être utilisé comme un écrou aveugle standard, dont le bulbe est formé en traction par un outillage comportant un mandrin fileté, du type décrit dans le document FR2515283. L'écrou aveugle installé peut ensuite recevoir une vis classique, installée et retirée manuellement ou avec une visseuse.

## Revendications

1. Ecrou (32) pour assembler des éléments d'une structure (12), ledit écrou comprenant :
- une collerette (70) apte à contacter une face avant (16) de la structure ;
- une zone de serrage (76) présentant un diamètre extérieur (86) apte à être inséré dans un trou (20) de la structure ;
- une zone de déformation (78) adjacente à la zone de serrage et apte à former un bulbe (80) contre une face arrière (18) de la structure, opposée à la face avant ; et
- une portion taraudée (66) adjacente à la zone de déformation ;
l'écrou comportant un rainurage (82) sur une circonférence extérieure d'au moins une partie de la zone de déformation, et en ce qu'un diamètre maximal (87) dudit rainurage (82) est inférieur ou égal au diamètre extérieur (86) de la zone de serrage (76),
le rainurage (82) s'étendant sur l'ensemble de la circonférence extérieure d'une section transversale de l'écrou (32) sous forme de stries (84),
l'écrou étant **caractérisé en ce qu'**un pas radial (88) entre deux stries consécutives est inférieur ou égal à 0,25 mm.

2. Ecrou selon la revendication 1, dans lequel le pas radial (88) est compris entre 0,04 mm et 0,25 mm.

3. Ecrou selon la revendication 1 ou 2, dans lequel une profondeur radiale (90) des stries est comprise entre 0,6 % et 2 % du diamètre extérieur (86) de l'écrou.

4. Ecrou selon l'une des revendications 1 à 3, dans lequel les stries (84) s'étendent parallèlement à un axe de révolution (63) de l'écrou.

5. Ecrou selon l'une des revendications 1 à 3, dans lequel les stries (84) s'étendent en hélice autour d'un axe de révolution (63) de l'écrou.

6. Ecrou selon l'une des revendications précédentes, dans lequel le rainurage (82) présente une section sensiblement sinusoïdale.

7. Rivet (14) comprenant : une vis (30) comportant une portion filetée (36), un fût (38) et une tête (40) ; et un écrou (32) selon l'une des revendications précédentes, la zone de serrage (76) de l'écrou étant apte à recevoir le fût (38) de la vis, la portion taraudée (66) dudit écrou aveugle étant apte à coopérer avec la portion filetée de la vis.

8. Assemblage (10) comprenant :
- au moins une structure (12) comprenant une face avant (16) et une face arrière (18) opposées, un trou (20) débouchant sur chacune desdites surfaces; et
- un écrou (32) selon l'une des revendications 1 à 6,
ledit assemblage étant apte à être disposé dans une configuration installée, dans laquelle :
- la collerette (70) de l'écrou est au contact de la face avant (16) ;
- la zone de déformation (78) de l'écrou forme un bulbe externe (80) au contact de la face arrière; et
- le rainurage contacte la face arrière (18) et une arête (26) formant intersection entre le trou (20) et ladite face arrière (18).

9. Assemblage selon la revendication 8, tel que, dans une configuration initiale, avant déformation sous forme de bulbe externe de la zone de déformation (76), un diamètre maximal du rainurage (82) est inférieur à un diamètre minimal du trou (20).

10. Assemblage selon la revendication 8 ou 9, prise en combinaison avec la revendication 3, dans lequel la face arrière (18) comporte une couche de peinture (94) d'épaisseur (96) supérieure à la profondeur (90) des stries (84).

11. Assemblage selon l'une des revendications 8 à 10, comportant de plus une vis (30) comportant une portion filetée (36) et une tête (40), telle que, dans la configuration installée, la tête (40) est au contact de la collerette (70) de l'écrou (32), et la portion filetée (36) coopère avec la portion taraudée (66) de l'écrou (32).

## Patentansprüche

1. Mutter (32) zum Zusammenbau von Elementen einer Struktur (12), wobei die Mutter umfasst:
- einen Flansch (70), der geeignet ist, eine Vorderseite (16) der Struktur zu berühren;
- einen Klemmbereich (76) mit einem Außendurchmesser (86), der geeignet ist, in ein Loch (20) der Struktur eingesetzt zu werden;
- einen Verformungsbereich (78), der an den Klemmbereich angrenzt und dazu geeignet ist, eine Wölbung (80) gegen eine der Vorderseite gegenüberliegende Rückseite (18) der Struktur zu bilden; und
- einen Innengewindeabschnitt (66), der an den Verformungsbereich angrenzt;
die Mutter Rillen (82) auf einem Außenumfang von mindestens einem Teil des Verformungsbereichs aufweist, und dass ein maximaler Durchmesser (87) der Rillen (82) kleiner oder gleich dem Außendurchmesser (86) des Klemmbereichs (76) ist,
die Rillen (82) sich in Form von Streifen (84) über den gesamten Außenumfang eines Querschnitts der Mutter (32) erstrecken,
wobei die Mutter **dadurch gekennzeichnet ist, dass** ein radialer Abstand (88) zwischen zwei aufeinanderfolgenden Streifen kleiner oder gleich 0,25 mm ist.

2. Mutter nach Anspruch 1, wobei der radiale Abstand (88) zwischen 0,04 mm und 0,25 mm liegt.

3. Mutter nach Anspruch 1 oder 2, wobei eine radiale Tiefe (90) der Streifen zwischen 0,6 % und 2 % des Außendurchmessers (86) der Mutter beträgt.

4. Mutter nach einem der Ansprüche 1 bis 3, wobei sich die Streifen (84) parallel zu einer Drehachse (63) der Mutter erstrecken.

5. Mutter nach einem der Ansprüche 1 bis 3, wobei sich die Streifen (84) schraubenförmig um eine Drehachse (63) der Mutter erstrecken.

6. Mutter nach einem der vorhergehenden Ansprüche, wobei die Rillen (82) einen im Wesentlichen sinusförmigen Querschnitt aufweisen.

7. Niet (14), umfassend: eine Schraube (30) mit einem Gewindeabschnitt (36), einem Schaft (38) und einem Kopf (40); und eine Mutter (32) nach einem der vorhergehenden Ansprüche, wobei der Klemmbereich (76) der Mutter geeignet ist, den Schaft (38) der Schraube aufzunehmen, wobei der Innengewindeabschnitt (66) der Blindmutter geeignet ist, mit dem Gewindeabschnitt der Schraube zusammenzuwirken.

8. Baugruppe (10), umfassend:
- mindestens eine Struktur (12), umfassend eine Vorderseite (16) und eine Rückseite (18), die sich gegenüber liegen, ein Loch (20), das in jede der Oberflächen mündet; und
- eine Mutter (32) nach einem der Ansprüche 1 bis 6,
wobei die Baugruppe geeignet ist, in einer installierten Konfiguration angeordnet zu werden, wobei:
- der Flansch (70) der Mutter in Kontakt mit der Vorderseite (16) ist;
- der Verformungsbereich (78) der Mutter eine äußere Wölbung (80) bildet, die die Rückseite berührt; und
- die Rillen die Rückseite (18) und eine Kante (26) berühren, die das Loch (20) und die Rückseite (18) schneidet.

9. Baugruppe nach Anspruch 8, derart, dass in einer Anfangskonfiguration vor der Verformung zu einer äußeren Wölbung des Verformungsbereichs (76) ein maximaler Durchmesser der Rillen (82) kleiner ist als ein minimaler Durchmesser des Lochs (20).

10. Baugruppe nach Anspruch 8 oder 9 in Kombination mit Anspruch 3, wobei die Rückseite (18) eine Farbschicht (94) aufweist, deren Dicke (96) größer ist als die Tiefe (90) der Streifen (84).

11. Baugruppe nach einem der Ansprüche 8 bis 10, die zusätzlich eine Schraube (30) mit einem Gewindeabschnitt (36) und einem Kopf (40) umfasst, so dass in der installierten Konfiguration der Kopf (40) den Flansch (70) der Mutter (32) berührt und der Gewindeabschnitt (36) mit dem Innengewindeabschnitt (66) der Mutter (32) zusammenwirkt.

## Claims

1. A nut (32) for joining elements of a structure (12), said nut comprising:
- a collar (70) capable of contacting a front face (16) of the structure;
- a clamping area (76) with an external diameter (86) that can be inserted into a hole (20) in the structure;
- a deformation zone (78) adjacent to the clamping zone and capable of forming a bulge (80) against a rear face (18) of the structure, opposite the front face; and
- a tapped portion (66) adjacent to the deformation zone;
the nut comprising a groove (82) on an outer circumference of at least part of the deformation zone, and in that a maximum diameter (87) of said groove (82) is less than or equal to the outer diameter (86) of the clamping zone (76),
the grooving (82) extending around the entire outer circumference of a cross-section of the nut (32) in the form of ridges (84),
the nut being **characterised in that** a radial pitch (88) between two consecutive ridges is less than or equal to 0.25 mm.

2. A nut as claimed in claim 1, wherein the radial pitch (88) is between 0.04 mm and 0.25 mm.

3. A nut according to claim 1 or 2, wherein a radial depth (90) of the ridges is between 0.6% and 2% of the outer diameter (86) of the nut.

4. A nut according to one of claims 1 to 3, wherein the ridges (84) extend parallel to an axis of revolution (63) of the nut.

5. A nut according to one of claims 1 to 3, in which the ridges (84) extend helically around an axis of revolution (63) of the nut.

6. A nut according to one of the preceding claims, in which the groove (82) has a substantially sinusoidal cross-section.

7. A rivet (14) comprising: a screw (30) comprising a threaded portion (36), a shank (38) and a head (40); and a nut (32) according to one of the preceding claims, the clamping zone (76) of the nut being able to receive the shank (38) of the screw, the threaded portion (66) of the said blind nut being able to cooperate with the threaded portion of the screw.

8. An assembly (10) comprising:
- at least one structure (12) comprising first (16) and second (18) opposing surfaces and a hole (20) opening into each of said surfaces; and
- a nut (32) according to any one of claims 1 to 6
said assembly being able to be arranged in an installed configuration, wherein:
- the collar (70) of the nut is in contact with the front face (16);
- the deformation zone (78) of the nut forms an external bulb (80) in contact with the rear face; and
- the grooving contacts the rear face (18) and an edge (26) forming an intersection between the hole (20) and said rear face (18).

9. An assembly according to claim 8, such that, in an initial configuration, before deformation in the form of an external bulb of the deformation zone (76), a maximum diameter of the groove (82) is less than a minimum diameter of the hole (20).

10. An assembly according to claim 8 or 9, taken in combination with claim 3, in which the rear face (18) comprises a layer of paint (94) with a thickness (96) greater than the depth (90) of the ridges (84).

11. An assembly according to one of claims 8 to 10, further comprising a screw (30) comprising a threaded portion (36) and a head (40), such that, in the installed configuration, the head (40) is in contact with the collar (70) of the nut (32), and the threaded portion (36) cooperates with the threaded portion (66) of the nut (32).
